# EUROPÄISCHE PATENTSCHRIFT

(11) **EP 1 212 219 B1**
(45) Veröffentlichungstag und Bekanntmachung des Hinweises auf die Patenterteilung: **19.05.2004**
(21) Anmeldenummer: 00958142.2
(22) Anmeldetag: 18.07.2000
(51) Int. Cl.: B60R 25/00, G07C 9/00, E05B 49/00

(54) **VORRICHTUNG ZUR BENUTZERSPEZIFISCHEN FAHRZEUGFREIGABE**
USER SPECIFIC VEHICLE USE AUTHORISATION DEVICE
DISPOSITIF POUR AUTORISER L'UTILISATION D'UN VEHICULE DE MANIERE SPECIFIQUE A UN UTILISATEUR

(30) Priorität: 31.07.1999 DE 19936271
(43) Veröffentlichungstag der Anmeldung: 12.06.2002
(73) Patentinhaber: ROBERT BOSCH GMBH, 70442 Stuttgart (DE)
(72) Erfinder: WEISS, Karl-Ernst, D-76275 Ettlingen (DE); KROENINGER, Mario, D-77815 Buehl-Neusatz (DE)
(86) Internationale Anmeldenummer: PCT/DE2000/002321
(87) Internationale Veröffentlichungsnummer: WO 2001/008941

(56) Entgegenhaltungen:
- WO-A-94/12372
- WO-A-99/24938
- DE-C- 19 707 058
- DE-U- 29 808 723
- US-A- 5 686 765

## Beschreibung

### Stand der Technik

Die Erfindung geht aus von einer Vorrichtung zur benutzerspezifischen Fahrzeugfreigabe nach der Gattung des unabhängigen Anspruchs. Aus der DE 197 07 058 C1 ist bereits ein Diebstahlschutzsystem für ein Kraftfahrzeug bekannt. Mit einem Betriebsschlüssel kann das Fahrzeug nur für eine bestimmte Nutzungsdauer in Betrieb genommen werden. Vor Ablauf der Nutzungsdauer muß ein Freigabesignal erzeugt werden, wodurch die Nutzungsdauer verlängert wird. Dies geschieht durch Spracheingabe. Wenn das gesprochene Kennwort oder der Sprecher als berechtigt erkannt werden, so wird das Freigabesignal erzeugt. Zur Erzeugung dieses Freigabesignals muß jedoch bereits das Sprachreferenzmuster, anhand dessen die Berechtigung überprüft wird, im Fahrzeug abgelegt worden sein.

Aus der WO 94/12372 A ist weiterhin ein Diebstahlschutzsystem für ein Fahrzeugs bekannt, das zur Überprüfung der Startberechtigung einen Vergleich eines in einem Kartenleser eingesteckten Identifikationsnachweises mit einem in einem Computerspeicher per Funkübertragung ablegbaren Identifikationsmuster durchführt. Darüber hinaus ist aus der US 5 686 765 A bekannt, dass die Identifikation für die Startberechtigung eines Fahrzeugs auch mittels biometrischer Daten wie Fingerabdruck oder Netzhaut erfolgen kann.

Der Erfindung liegt die Aufgabe zugrunde, ein benutzerspezifisches Diebstahlschutzsystem anzugeben, welches schnell an unterschiedliche Benutzerprofile angepaßt werden kann. Die Aufgabe wird gelöst durch die Merkmale des unabhängigen Anspruchs.

### Vorteile der Erfindung

Die erfindungsgemäße Vorrichtung zur benutzerspezifischen Fahrzeugfreigabe weist eine erste Biometriedatenerfassung auf, die eine benutzerspezifische Biometrieinformation als Referenz-Biometrieinformation erfaßt. Über eine Übertragungsstrecke wird die Referenz-Biometrieinformation an einen fahrzeugseitigen Empfänger abgegeben. Die Referenz-Biometrieinformation wird in einem Speicher abgelegt. Im Fahrzeug ist eine zweite Biometriedatenerfassung vorgesehen, die eine benutzerspezifische Biometrieinformation als Ist-Biometrieinformation erfaßt. Eine Steueranordnung vergleicht die Ist-Biometrieinformation mit der Referenz-Biometrieinformation und gibt ein Freigabesignal an eine betriebsnotwendige Komponente des Kraftfahrzeugs ab, wenn die Ist-Biometrieinformation mit der Referenz-Biometrieinformation übereinstimmt. Durch den Rückgriff auf biometrische Identifikationsverfahren wie die Erfassung von Fingerabdruck, Augeniris, Sprache, wird sichergestellt, daß nur dieser sich so als berechtigt ausweisende Benutzer die Fahr- und/oder Zugangsberechtigung erlangt. Insbesondere für Vermietfirmen ermöglicht die vorgeschlagene Vorrichtung bei häufig wechselnden Fahrern eine einfache Erfassung und Abspeicherung personenspezifischer Kenndaten und eine Gewähr dafür, daß nur der Ausleiher das Fahrzeug in Betrieb nehmen kann (Haftung, Schadenerstatz) . Hierzu ist die erste Biometrieerfassung vorzugsweise ortsfest bei der Vermietfirma installiert. So kann die Referenz-Biometrieinformation unter Aufsicht des Vermietpersonals eingelesen und an das zu vermietende Fahrzeug weitergeleitet werden.

In einer zweckmäßigen Weiterbildung ist die Übertragungsstrecke bidirektional ausgeführt. Dadurch kann der Einlesevorgang der Referenz-Biometrieinformation in den Speicher der Steueranordnung überwacht werden, indem nach erfolgreichem Einlesen ein Quittungssignal an die Datenverarbeitung der ersten Biometrieerfassung zurückgesendet wird oder die abgespeicherten Daten an die erste Biometriedatenerfassung zwecks Prüfung auf Richtigkeit zurückgesendet werden

Eine zweckmäßige Ausgestaltung sieht die Übertragung einer Ressourceninformation vor. Hierbei kann es sich beispielsweise um die zugelassene Nutzungsdauer, Strecke etc. handeln. Dadurch wird die Ressource eindeutig in Verbindung mit der Referenz-Biometrieinformation dem berechtigten.Benutzer zugeordnet. Das in Abhängigkeit von dem Vergleich zwischen Referenz-Biometrieinformation und Ist- Biometrieinformation gebildete Freigabesignal aktiviert beispielsweise den Öffnungsvorgang eines Schließsystems oder schaltet ein betriebsnotwendiges Motorsteuergerät frei, solange die Ressource nicht verbraucht ist. Die Biometriedatenerfassung kann sowohl zur Zugangsberechtigung als auch zur Fahrberechtigung herangezogen werden. Im Falle der Zugangsberechtigung ist die zweite Biometriedatenerfassung an der Außenseite des Kraftfahrzeugs, vorzugsweise im Türgriffbereich, anzuordnen.

Weitere zweckmäßige Weiterbildungen ergeben sich aus weiteren abhängigen Ansprüchen und aus der Beschreibung.

### Zeichnung

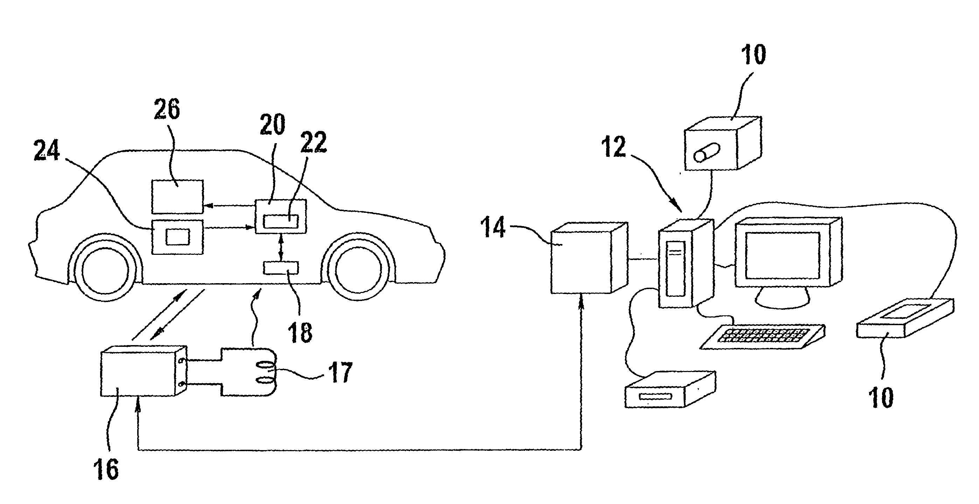

Ein Ausführungsbeispiel der Erfindung ist in der Zeichnung dargestellt und wird im folgenden näher beschrieben. Es zeigt die Figur 1 ein Blockschaltbild des Ausführungsbeispiels.

### Beschreibung des Ausführungsbeispiels

Eine erste Biometriedatenerfassung 10 erfaßt eine benutzerspezifische Biometrieinformation als Referenz-Biometrieinformation, die die ortsfeste Datenverarbeitung 12 aufbereitet. Die Referenz-Biometrieinformation wird über die Datenverarbeitung 12, einen ersten Transceiver 14, eine Datenübertragungsleitung, einen zweiten Transceiver 16, eine induktiv wirkende Antenne 17 an einen Sender/Empfänger 18 im Fahrzeug übertragen. Der fahrzeugseitige Sender/Empfänger 18 tauscht Daten aus mit einer Steueranordnung 20, die einen Speicher 22 umfaßt. In diesen Speicher 22 wird die Referenz-Biometrieinformation eingelesen. In oder an dem Kraftfahrzeug befindet sich eine zweite Biometriedatenerfassung 24, die eine benutzerspezifische Biometrieinformation als Ist-Biometrieinformation erfaßt und an die Steueranordnung 20 abgibt. In Abhängigkeit von dem Vergleich der Ist-Biometrieinformation und der Referenz-Biometrieinformation gibt die Steueranordnung 20 ein Freigabesignal an eine betriebsnotwendige Komponente 26.

Die erste Biometriedatenerfassung 10, die Datenverarbeitung 12 und der erste Transceiver 14 sind ortsfest bei einer Mietwagenfirma angeordnet. Wenn ein Kunde ein Kraftfahrzeug mieten möchte, wird dessen benutzerspezifische Biometrieinformation erfaßt. Hierbei kann es sich um einen Fingerabdruck, ein Irismuster oder ein Sprachsignal handeln. Die Datenverarbeitung 12 ordnet der erfaßten Referenz-Biometrieinformation eine Ressourceninformation zu, die von der Mietwagenfirma vergeben wird. Als Ressourceninformation dient beispielsweise die maximal zulässige Nutzungsdauer, die zulässige Strecke oder ähnliches. Referenz-Biometrieinformation und Ressourceninformation gelangen über den ersten Transceiver 14 und eine hier bidirektional betriebene Datenleitung an den zweiten Transceiver 16. Der zweite Transceiver 16 ist von der Datenverarbeitung 12 entfernt in der Nähe des zu vermietenden Fahrzeugs angeordnet. Der zweite Transceiver 16 steuert die bidirektional induktiv wirkende, z. B. als Schleife ausgebildete Antenne 17 an, um die Referenz-Biometrieinformation und die Ressourceninformation an das Fahrzeug zu übertragen.

Der fahrzeugseitig angeordnete Sender/Empfänger 18 empfängt die Referenz-Biometrieinformation und die Ressourceninformation und leitet sie an die Steueranordnung 20 weiter. Diese beiden Daten werden in dem Speicher 22 hinterlegt. Sobald sie eingelesen sind, veranlaßt die Steueranordnung 20 den Sender/Empfänger 18 zur Rücksendung eines Quittungssignals an den die induktive Antenne 17. Über den damit gekoppelten Transceiver 16 und die bidirektional ausgeführte Datenleitung wird dieses Quittungssignal an die Datenverarbeitung 12 zurückgesendet. Damit ist das Kraftfahrzeug für den Benutzer vorbereitet, der sich zuvor über die erste Biometriedatenerfassung 10 ausgewiesen hat.

Die in Speicher 22 hinterlegte Referenz-Biometrieinformation wird zur Fahrberechtigungs- und/oder Zugangsberechtigungsabfragen herangezogen. Die zweite Biometriedatenerfassung 24 ist vorzugsweise im Fahrzeuginnenraum angeordnet. Um das Fahrzeug in Betrieb nehmen zu können, muß sich der neue Benutzer identifizieren lassen, indem die zweite Biometriedatenerfassung 24 eine Ist-Biometrieinformation erfaßt, die die Steueranordnung 20 mit der im Speicher 22 hinterlegten Referenz-Biometrieinformation vergleicht. Bei Übereinstimmung wird ein Freigabesignal an eine betriebsnotwendige Komponente 26 wie beispielsweise ein Motorsteuergerät erzeugt. Die Steueranordnung 20 fragt die ebenfalls im Speicher 22 hinterlegte Ressourceninformation mit jedem Startvorgang neu ab, ob die Ressource noch nicht aufgebraucht ist. Als Vergleichsgrößen dienen beispielsweise der aktuelle Kilometerstand oder Datum und Uhrzeit. Nur wenn genügend Ressourcen vorhanden sind, wird der Startvorgang des Kraftfahrzeugs durch die entsprechende Generierung des Freigabesignals ermöglicht.

In einer alternativen Ausgestaltung kann die Biometriedatenerfassung 24 an der Außenseite des Kraftfahrzeugs angebracht sein. Stimmen Referenz-Biometrieinformation und Ist-Biometrieinformation überein, wird das Schließsystem des Kraftfahrzeugs im Sinne eines Öffnens angesteuert.

Eine einfachere Ausführung sieht vor, daß die induktiv wirkende Antenne 17 direkt mit dem ersten Transceiver 14 gekoppelt ist, so daß die Datenleitung zwischen erstem Transceiver 14 und zweiten Transceiver 16 entfällt, ebenso wie der zweite Transceiver 16 selbst.

Wird auf die Quittierung verzichtet, kann die Datenleitung unidirektional ausgeführt werden und der erste Transceiver 14 durch einen reinen Datensender, der zweite Transceiver 16 durch einen reinen Datenempfänger mit angeschlossenem Verstärker zum Betrieb der induktiv wirkenden Antenne 17 ersetzt werden.

Der Datenaustausch zwischen Fahrzeug und ortsfester Biometriedatenerfassung/-verwaltung kann natürlich auch auf anderem Weg - z. B. mittels Funk, Infrarot oder direkten Anschluß an z. B. die Diagnosesteckverbindung des Fahrzeugs - erfolgen.

## Patentansprüche

1. Vorrichtung zur benutzerspezifischen Fahrzeugfreigabe
- mit einer ersten Datenerfassung (10), die eine benutzerspezifische Information als Referenz-Information erfasst, die von einer ortsfesten Datenverarbeitung (12) aufbereitet ist,
- mit einer Übertragungsstrecke (14, 16, 17, 18), über die die Referenz-Information an einen fahrzeugseitigen Sender/Empfänger (18) abgebbar ist, wobei die Referenz-Information in einem Speicher (22) ablegbar ist,
- mit einer dem Fahrzeug zugeordneten zweiten Datenerfassung (24), die eine benutzerspezifische Information als Ist-Information erfasst,
- mit einer Steueranordnung (20), die die Ist-Information mit der Referenz-Information vergleicht und ein Freigabesignal an eine betriebsnotwendige Komponente (26) abgibt, wenn die Ist-Information mit der Referenz-Information übereinstimmt,
**dadurch gekennzeichnet, dass**
- die Referenz-Information und die Ist-Information auf Biometrie-Daten basieren,
- in der ortsfesten Datenverarbeitung (12) eine Ressourceninformation generierbar ist und
- Mittel zur Übertragung von der ortsfesten Datenverarbeitung (12) zum Fahrzeug sowie zum Abspeichern der Ressourceinformation im Fahrzeug vorgesehen sind.

2. Vorrichtung nach Anspruch 1, **dadurch gekennzeichnet, dass** als betriebsnotwendige Komponente ein Schließsystem oder ein Funktionssteuergerät (26) verwendet ist.

3. Vorrichtung nach einem der vorhergehenden Ansprüche, **dadurch gekennzeichnet, dass** die Steueranordnung (20) das Freigabesignal in Abhängigkeit von der Ressourceninformation abgibt.

4. Vorrichtung nach einem der vorhergehenden Ansprüche, **dadurch gekennzeichnet, dass** als Ressourceninformation die zurückzulegende Strecke, die Fahrzeit oder Zeitvorgabe verwendet ist.

5. Vorrichtung nach einem der vorhergehenden Ansprüche, **dadurch gekennzeichnet, dass** die Übertragungsstrecke (14, 16, 18, 17) bidirektional ausgelegt ist und ein Quittungssignal von dem fahrzeugseitigen Sender/Empfänger (18) abgegeben wird, wenn die Referenzbiometrie-Information in dem Speicher (22) abgelegt wurde.

## Claims

1. Apparatus for enabling a vehicle on a user-specific basis
- having a first data capture unit (10), which captures user-specific information in the form of reference information which has been conditioned by a fixed-location data processing unit (12),
- having a transmission link (14, 16, 17, 18) which can be used to send the reference information to a transmitter/receiver (18) in the vehicle, the reference information being able to be stored in a memory (22),
- having a second data capture unit (24), which is associated with the vehicle and captures user-specific information as actual information,
- having a control arrangement (20) which compares the actual information with the reference information and sends an enable signal to a component (26) which is necessary for operation if the actual information matches the reference information,
**characterized in that**
- the reference information and the actual information are based on biometric data,
- the fixed-location data processing unit (12) is able to generate resource information, and
- means for transmission from the fixed-location data processing unit (12) to the vehicle and for storing the resource information in the vehicle are provided.

2. Apparatus according to Claim 1, **characterized in that** the component necessary for operation which is used is a locking system or a function control unit (26).

3. Apparatus according to one of the preceding claims, **characterized in that** the control arrangement (20) sends the enable signal on the basis of the resource information.

4. Apparatus according to one of the preceding claims, **characterized in that** the resource information used is the distance to be covered, the journey time or time preset.

5. Apparatus according to one of the preceding claims, **characterized in that** the transmission link (14, 16, 18, 17) is of bidirectional design and an acknowledgement signal is sent by the vehicle's transmitter/receiver (18) when the reference biometric information has been stored in the memory (22).

## Revendications

1. Dispositif pour autoriser l'utilisation d'un véhicule de manière spécifique à un utilisateur, comportant
- un dispositif d'enregistrement de données (10), qui enregistre une information spécifique à un utilisateur en tant qu'information de référence, cette information étant traitée par un dispositif de traitement des données fixe (12),
- un trajet de transmission (14, 16, 17, 18) par le biais duquel l'information de référence pouvant être fournie à un émetteur/récepteur situé du côté du véhicule (18), l'information de référence peut être stockée dans une mémoire (22),
- un deuxième dispositif d'enregistrement de données (24), qui enregistre une information spécifique à un utilisateur en tant qu'information réelle,
- un dispositif de commande (20), qui compare l'information réelle avec l'information de référence et émet un signal d'autorisation d'utilisation vers un composant nécessaire au fonctionnement (26)
lorsque l'information réelle concorde avec l'information de référence, **caractérisé en ce que**
- l'information de référence et l'information réelle sont basées sur des données biométriques,
- un information relative aux ressources peut être générée dans le dispositif de traitement des données fixe (12) et
- on prévoit des moyens de transmission du dispositif de traitement des données fixe (12) vers le véhicule, ainsi que des moyens de stockage des informations relatives aux ressources dans le véhicule.

2. Dispositif selon la revendication 1,
**caractérisé en ce que**
comme composant nécessaire au fonctionnement on utilise un système de fermeture ou un appareil de commande du fonctionnement (26).

3. Dispositif selon l'une quelconque des revendications précédentes,
**caractérisé en ce que**
le dispositif de commande (20) émet le signal d'autorisation d'utilisation en fonction de l'information relative aux ressources.

4. Dispositif selon l'une quelconque des revendications précédentes,
**caractérisé en ce que**
comme information relative aux ressources on utilise le trajet à parcourir, le temps de trajet ou l'indication de temps.

5. Dispositif selon l'une quelconque des revendications précédentes,
**caractérisé en ce que**
le trajet de transmission (14, 16, 18, 17) est conçu de façon bidirectionnelle et un signal de confirmation est émis par l'émetteur/récepteur situé du côté du véhicule (18) lorsque l'information biométrique de référence a été stockée dans la mémoire (22).
